(19) Europäisches Patentamt
European Patent Office
Office européen des brevets

(11) EP 1 359 411 A2

(12) **EUROPÄISCHE PATENTANMELDUNG**

(43) Veröffentlichungstag:
05.11.2003 Patentblatt 2003/45

(51) Int Cl.⁷: $G01N\ 27/407$

(21) Anmeldenummer: 03101214.9

(22) Anmeldetag: 02.05.2003

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **03.05.2002 DE 10219881**

(71) Anmelder: **SIEMENS AKTIENGESELLSCHAFT**
**80333 München (DE)**

(72) Erfinder:
- **Fleischer, Maximilian**
  **85635 Höhenkirchen (DE)**
- **Magori, Erhard**
  **85622 Feldkirchen (DE)**
- **Meixner, Hans**
  **85540 Haar (DE)**
- **Mrotzek, Christine**
  **85560 Ebersberg (DE)**

(54) **Vorrichtung und Verfahren zur Bestimmung des Partialdruckes eines Messgases in einem Messgasraum**

(57) Ein Messsensor (1) für die Bestimmung des Partialdruckes eines Messgases in einem Messgasraum (5) weist einen Ionenleiter (2) auf, auf den Pumpelektroden (3, 4) angebracht sind. Eine der Pumpelektroden (4) ist mit Hilfe einer Abdeckung (7) gasdicht abgedichtet. Durch eine Messung der Nernst'schen Spannung an den Pumpelektroden (3, 4) oder durch eine Messung der zwischen den Pumpelektroden (3, 4) gemessenen Ladungsmenge kann der Partialdruck des Messgases im Messgasraum (5) bestimmt werden.

FIG 1

EP 1 359 411 A2

**Beschreibung**

Vorrichtung und Verfahren zur Bestimmung des Partialdruckes eines Messgases in einem Messgasraum

Die Erfindung betrifft eine Vorrichtung zur Bestimmung des Partialdruckes eines Messgases in einem Messgasraum mit einer gasselektiven Pumpzelle, die einen Ionenleiter aufweist, der zwischen mit Spannung beaufschlagbaren Pumpelektroden angeordnet ist.

Die Erfindung betrifft ferner ein Verfahren zur Bestimmung des Partialdruckes eines Messgases in einem Messgasraum unter Verwendung einer Pumpzelle, die einen zwischen Pumpelektroden angeordneten Ionenleiter aufweist.

Derartige Vorrichtungen werden als sogenannte Lambda-Sonden zur Messung des Sauerstoffgehalts von Abgasen verwendet. Der Ionenleiter ist dabei ein Festelektrolyt auf der Basis von $ZrO_2$. Durch Messung der Spannung an den Pumpelektroden, die auf den Ionenleiter aufgebracht sind, kann der Sauerstoffgehalt des an der Lambda-Sonde vorbeiströmenden Abgases bestimmt werden. Dabei kann die klassische Lambda-Sonde mit guter Messgenauigkeit nur zwischen Sauerstoffanwesenheit und Sauerstoffabwesenheit unterscheiden. Das heißt, dass die klassische Lambda-Sonde lediglich die Detektion des stöchiometrischen Punkts ermöglicht. Die Messung des Sauerstoffgehalts im mageren und im fetten Abgas ist dagegen nur mit sehr hoher Messunsicherheit möglich. Außerdem benötigen die klassischen Lambda-Sonden ein Referenzgas mit definiertem Sauerstoffgehalt, da nur eine Relativmessung zwischen Gasen mit unterschiedlichem Sauerstoffgehalt möglich ist. Letzteres bedeutet einen nicht unerheblichen Aufwand bei der Anfertigung geeigneter Gehäuse.

Um die Kennlinien der klassischen Lambda-Sonden zu linearisieren, wurden sogenannte Breitband-Lambda-Sonden entwickelt.

Diese Breitband-Lambda-Sonden weisen eine Pumpzelle auf, die mit konstanter Spannung betrieben wird. Die Pumpzelle ist durch einen Diffusionskörper vom eigentlichen Messgasraum getrennt. Der Diffusionskörper begrenzt die Sauerstoffumsetzung in der Pumpzelle und beschränkt dadurch den Messstrom, der an der Pumpzelle gemessen wird. Dadurch ergibt sich eine lineare Abhängigkeit des Messstroms von der Sauerstoffkonzentration im Messgasraum.

Allerdings ist es schwierig, den Diffusionskörper so zu gestalten, dass die Diffusionskonstanten innerhalb enger Grenzen liegen. Außerdem können sich die Eigenschaften des Diffusionskörpers durch Verschmutzung oder thermische Alterung auf nicht vorhersagbare Weise ändern. Dementsprechend schwierig ist es, die Breitband-Lambda-Sonden über lange Zeiträume stabil zu halten.

Ausgehend von diesem Stand der Technik liegt der Erfindung die Aufgabe zugrunde, eine Vorrichtung und ein Verfahren mit verbesserter Stabilität und vergrößertem Messbereich anzugeben.

Diese Aufgabe wird erfindungsgemäß durch eine Vorrichtung gelöst, bei der über eine erste dem Messgasraum zugewandte Pumpelektrode Messgas zwischen dem Messgasraum und dem Ionenleiter austauschbar ist und bei der über eine zweite dem Messgasraum abgewandte Pumpelektrode Messgas zwischen dem Ionenleiter und einem gasdichten Messgasspeicher austauschbar ist.

Diese Aufgabe wird erfindungsgemäß ferner durch ein Verfahren gelöst, bei dem mit Hilfe der Pumpzelle Messgas zwischen einem gasdichten Messgasspeicher und dem Messgasraum ausgetauscht wird, wobei zur Messung des Partialdruckes die Menge der dabei fließenden Messgas-Ionen bestimmt wird.

Bei der Vorrichtung und dem Verfahren gemäß der Erfindung wird Sauerstoff aus dem Abgas mit Hilfe der Pumpzelle in den gasdicht abgeschlossenen Messgasspeicher gepumpt. Aus der dabei fließenden Ladung kann auf die Konzentration von Sauerstoffmolekülen im Messgasraum geschlossen werden. Im Gegensatz zum Stand der Technik benötigen die Vorrichtung und das Verfahren gemäß der Erfindung keinen für Verschmutzungen oder thermische Alterung empfindlichen Diffusionskörper. Die Sensorkennlinie ist vielmehr vom Volumen des Messgasspeichers abhängig, dessen Wert auf einfache und reproduzierbare Weise konstant gehalten werden kann. Außerdem wird kein Referenzgas mit einer bekannten Messgaskonzentration zum Betrieb der Vorrichtung und zur Anwendung des Verfahrens gemäß der Erfindung benötigt.

Bei einer bevorzugten Ausführungsform der Erfindung wird an die Pumpelektroden der Pumpzelle eine periodisch variierende Spannung angelegt und die sich dabei ergebenden Stromamplituden gemessen. Gleichzeitig kann die an den Pumpelektroden anliegende Spannung einen Gleichspannungsanteil enthalten. Da die Stromamplitude auch von diesem Gleichspannungsanteil abhängt, kann die Messgaskonzentration bei konstant geregelter Stromamplitude entweder über die Höhe des Gleichspannungsanteils oder aber bei konstantem Gleichspannungsanteil über die Größe der Stromamplitude gemessen werden. Falls in einem Betriebszustand die Sauerstoffkonzentration bekannt ist, können über die zum Erreichen einer bestimmten Stromamplitude erforderliche Gleichspannung oder die bei einer bestimmten Gleichspannung erreichte Stromamplitude Alterungsprozesse der Vorrichtung detektiert werden.

Weitere Einzelheiten sind Gegenstand der abhängigen Ansprüche.

Nachfolgend werden Ausführungsbeispiele der Erfindung anhand der beigefügten Zeichnung im Einzelnen erläutert. Es zeigen:

Figur 1          einen Querschnitt durch einen Messsensor gemäß der Erfindung;

Figur 2a bis 2b   Diagramme, in denen die Abhängigkeit der Stromamplitude vom gemessenen Gleichspannungsanteil dargestellt ist;

Figur 3          einen Querschnitt durch einen in Schichttechnik hergestellten Messsensor;

Figur 4          einen Querschnitt durch einen abgewandelten in Schichttechnik hergestellten Messsensor;

Figur 5          eine Aufsicht auf die Messsensoren aus den Figuren 3 und 4;

Figur 6          eine Querschnittsansicht durch eine weitere Ausführungsform eines Messsensors, der die äußere Form einer herkömmlichen Lambda-Sonde aufweist;

Figur 7          eine Ansicht einer weiteren miniaturisierten Ausführungsform des Messsensors; und

Figur 8          eine perspektivische Ansicht einer Vorrichtung zum Kontaktieren eines miniaturisierten Messsensors.

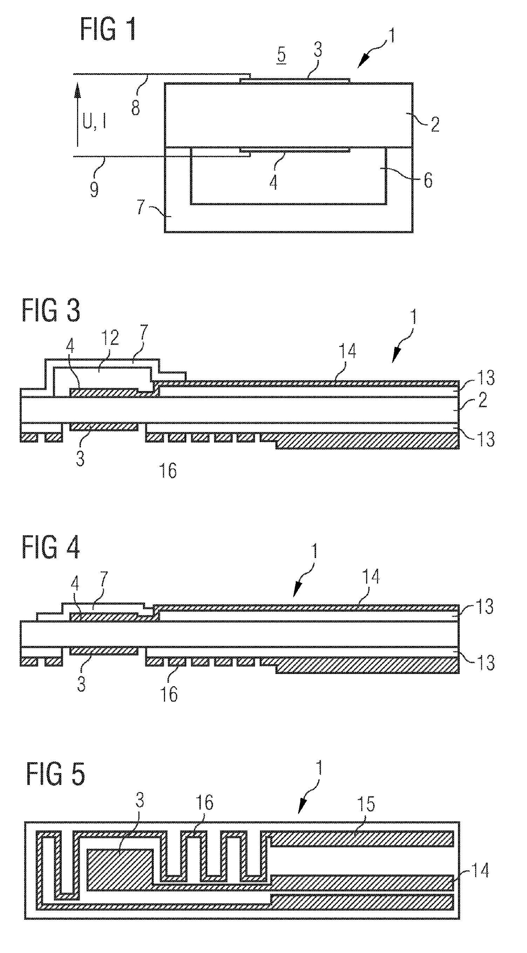

Figur 1 zeigt einen Messsensor 1, der einen Ionenleiter 2 aufweist, an dem Pumpelektroden 3 und 4 angebracht sind. Die äußere Pumpelektrode 3 ist einem Messgasraum 5 zugewandt, in dem sich das zu vermessende Messgas befindet. An die Pumpelektrode 4 grenzt weiterhin ein Messgasspeicher 6 an, der von einer den Raum über der Pumpelektrode 4 gasdicht abdichtenden Abdeckung 7 begrenzt wird.

Bei dem Ionenleiter 2 kann es sich beispielsweise um $ZrO_2$ handeln, das Sauerstoffionen leitet und daher für einen Sauerstoffsensor verwendet werden kann. Ein weiteres für einen Wasserstoffsensor geeignetes Material ist das dem Fachmann unter der Bezeichnung "NASICON" bekannte Material, das Protonen leitet. Die Pumpelektroden 3 und 4 sind vorzugsweise aus einem porösen Material mit ausreichender katalytischer Aktivität gefertigt. In Frage kommen Platin oder Legierungen von Platinmetallen oder andere geeignete Metalle und deren Legierungen, zum Beispiel Gold. Auch ein Metall-Keramik-Verbund kommt in Frage. Ein derartiger Metall-Keramik-Verbund ist dem Fachmann zum Beispiel unter der Bezeichnung "Cermet" bekannt.

Der Messsensor kann auf verschiedene Art und Weise betrieben werden. Bei einem ersten Betriebsmodus wird ausgehend von einem Gleichgewichtszustand durch Anlegen einer definierten und konstanten Pumpspannung an die Pumpelektroden 3 und 4 Messgas, zum Beispiel Sauerstoff, gegen die abgedichtete Pumpelektroe 4 gepumpt. Dieser Vorgang läuft so lange ab, bis an der Pumpelektrode 4 eine so hohe Messgaskonzentration aufgebaut ist, dass ebenso viel Messgas aufgrund des Gefälles der Messgaskonzentration zurückströmt, wie zur Pumpelektrode 4 gepumpt wird. Die bis zum Erreichen des Gleichgewichtszustands zwischen den beiden Pumpelektroden 3 und 4 geflossene Ladungsmenge ist ein unmittelbares Maß für die Messgaskonzentration im Messgasraum 5. Um eine weitere Messung durchführen zu können, wird die Spannung umgepolt und der Messgasspeicher 6 geleert. Der Messzyklus kann dann von Neuem beginnen.

Nachfolgend wird das Messverfahren im Einzelnen erläutert:

Durch den Ionenleiter 2 ist der Messgasraum 5 vom Messgasspeicher 6 getrennt. Daher kann im Messgasraum 5 ein Partialdruck $p_1$ und im Messgasspeicher 6 ein Partialdruck $p_2$ herrschen. Wenn an einen Anschluss 8 der Pumpelektrode 3 und einen Anschluss 9 der Pumpelektrode 4 bei einem Strom I = 0 eine Spannung U gemessen wird, so gilt die Nernst'sche Gleichung:

$$U = \frac{RT}{4F} \ln\left(\frac{p_1}{p_2}\right) = T \cdot 21,07 \cdot 10^6 \cdot \ln\left(\frac{p_1}{p_2}\right) \cdot \left[\frac{V}{K}\right]$$

$$(1)$$

wobei R die allgemeine Gaskonstante, T die Temperatur und F die Faraday-Konstante ist. Wenn für die an den Anschlüssen 8 und 9 anliegende Spannung U = 0 und für den durch die Anschlüsse 8 und 9 fließenden Strom 1 = 0 gilt, ist der äußere Messgaspartialdruck $p_1$ gleich dem inneren Partialdruck $p_2$. Dieser Zustand kann durch Kurzschließen der Anschlüsse 8 und 9 erreicht werden. Dabei fließt so lange ein Strom über die Anschlüsse 8 und 9, bis das Gleichgewicht hergestellt ist und der äußere Partialdruck $p_1$ gleich dem inneren Partialdruck $p_2$ ist.

Von diesem Gleichgewichtszustand aus beginnt nun der eigentliche Messvorgang. Zunächst wird eine von 0 verschiedene Spannung $U_1$ an die Anschlüsse 8 und 9 angelegt. Daraufhin fließt sofort ein Strom $I(t)$, der den Partialdruck $p_2$ im Messgasspeicher 6 verändert. Es sei darauf hingewiesen, dass sich der Partialdruck $p_1$ im Messgasraum 5 nicht verändern kann, da dieser aus einem Vergleich zum Messgasspeicher 6 nahezu unendlichen Reservoir an Messgas gespeist wird.

Falls das Messgas Sauerstoff ist, wird mit je zwei Elektronen ein Sauerstoff-Ion bewegt oder gepumpt. Das Integral über den Strom $I(t)$ ist die geflossene Ladungsmenge Q und entspricht der Anzahl der gepumpten Sauerstoffionen geteilt durch ihre Ladung. Somit gilt:

$$4n_{O_2} = 2n_{O^{2-}} = n_{e-} = \frac{Q}{e} = \int_{Start}^{End} I(t)dt \cdot \frac{1}{e}$$

$$(2)$$

wobei $n_O{}^2$ gleich der Zahl der gepumpten Sauerstoffmoleküle, $n_O{}^{2-}$ die Zahl der gepumpten Sauerstoffatome, $n_e$ gleich der Zahl der geflossenen Elektronen und e die Elementarladung ist. Da der Strom $I(t)$ an den Anschlüssen 8 und 9 gemessen werden kann, ist die Bestimmung des Stromintegrals und somit die Anzahl der gepumpten Sauerstoffmoleküle einfach durchführbar.

Durch das Anlegen der äußeren Spannung $U_1$ ändert sich der Messgaspartialdruck im Messgasspeicher 6 entsprechend der Gleichung:

$$p_{2end} = p_{2start} + \Delta p_2 = p_1 + \Delta p_2 \tag{3}$$

wobei V gleich dem Volumen des Messgasspeichers 6 ist und für die Druckänderung $\Delta p_2$ gilt:

$$\Delta p_2 = \frac{n_{O_2} \cdot RT}{V} \tag{4}$$

Nach Ablauf einer bestimmten Pumpzeit erreicht der Messsensor 1 einen Gleichgewichtszustand, in dem die von der Druckdifferenz $p_2 - p_1$ hervorgerufene Nernst'sche Spannung U gleich der äußeren Spannung $U_1$ ist. Außerdem ist der über die Pumpelektroden 3 und 4 fließende Strom gleich 0. Da im Gleichgewichtszustand die Nernst'sche Spannung U gleich der äußeren Pumpspannung $U_1$ ist, gilt:

$$p_1 = \exp\left(\frac{4UF}{RT}\right) \cdot p_{2end}$$

$$(5)$$

Aus den Gleichungen 3 bis 5 ergibt sich schließlich der Ausdruck:

$$p_1 \;=\; \frac{\Delta p_2}{1-\exp\!\left(\dfrac{4UF}{RT}\right)} \;=\; \frac{\dfrac{1}{4e}\displaystyle\int_{start}^{end} I(t)\,dt \cdot \dfrac{RT}{V}}{1-\exp\!\left(\dfrac{4UF}{RT}\right)}$$

$$(6)$$

Diese Gleichung kann vereinfacht auch geschrieben werden als:

$$p_1 = \text{const.}(V,T,U)\cdot \int I(t)\,dt$$

Dies bedeutet, dass die Messung des Partialdruckes $p_1$ auf eine Messung des Stromintegrals zurückgeführt ist. Die Größen V, T und U sind bekannt und weitere Materialeigenschaften haben auf die Messung keinen Einfluss. Dies bedeutet, dass das Stromintegral direkt proportional dem Partialdruck des zu vermessenden Messgases ist.

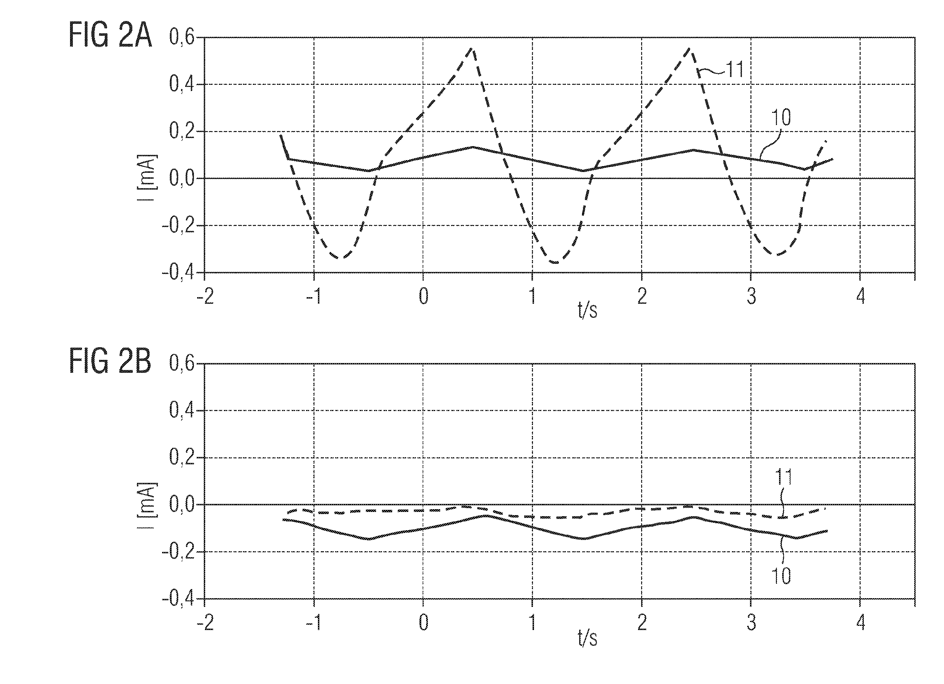

Bei einem abgewandelten Messverfahren wird an die Anschlüsse 8 und 9 gemäß Figur 2a ein Wechselstrom 10 mit einem Gleichspannungsanteil angelegt. Durch den Gleichspannungsanteil werden Sauerstoffionen an die Pumpelektrode 4 herangepumpt. Durch das Anlegen der Wechselspannung 10 wird ein Wechselstrom 11 aufgebaut, wobei die Amplitude des Wechselstroms 11 ein Maß für den Partialdruck des Messgases ist.

Der Gleichspannungsanteil der Wechselspannung 10, durch den Messgas-Ionen zur Pumpelektrode 4 gepumpt werden, beeinflusst ebenfalls die Amplitude des Wechselstroms 11. Je mehr Messgas-Ionen im Messgasspeicher zur Verfügung stehen, desto größer ist die Amplitude des Wechselstroms 11. Deutlich wird dies insbesondere anhand von Figur 2b, in der die Wechselstromamplitude 11 bei einem negativen Gleichspannungsanteil dargestellt ist, durch den der Messgasspeicher 6 geleert wird, so dass dem Ionenleiter 2 keine oder nur sehr wenige Messgas-Ionen zur Verfügung stehen.

Der Betrieb des Messsensors 1 kann durch eine geeignete Auswahl von Gleichspannungsanteil und Amplitude des Wechselstroms 11 sowie durch die Frequenz der Wechselspannung 10 optimiert werden. Zum Beispiel kann der Gleichspannungsanteil so geregelt werden, dass die Amplitude des Wechselstroms 11 konstant bleibt. Die Messgröße ist in diesem Fall der Gleichspannungsanteil.

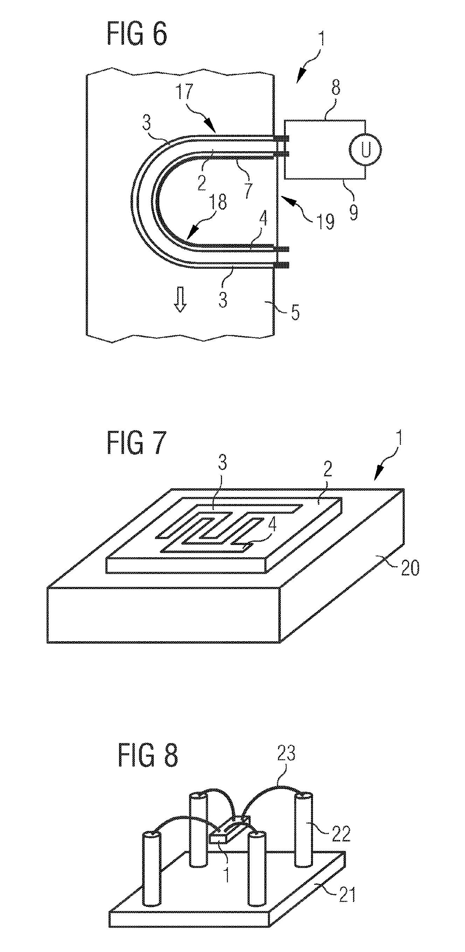

Der Messsensor 1 eignet sich auch für die Miniaturisierung. In Figur 3 ist ein Querschnitt durch eine erste miniaturisierte Ausführungsform des Messsensors 1 dargestellt. Der Ionenleiter 2 ist von einer Festelektrolytfolie gebildet, auf der die Pumpelektroden 3 und 4 ausgebildet sind. Oberhalb der Pumpelektrode 4 befindet sich eine poröse Schicht 12, die durch die Abdeckung 7 gasdicht abgeschlossen ist. Seitlich von den Pumpelektroden 3 und 4 ist der Ionenleiter 2 durch Isolationsschichten 13 abgedeckt. Auf den Isolationsschichten 13 befindet sich auch eine Zuleitung 14 für die Pumpelektroden 3 und 4 sowie Zuleitungen 15 für eine Heizeinrichtung 16. Durch die Heizeinrichtung 16 wird die Temperatur des Messsensors 1 stabilisiert. Daneben kann die Heizeinrichtung 16 auch zur Temperaturmessung herangezogen werden. Denn die im allgemeinen aus Platin hergestellten Wendel der Heizeinrichtung 16 weisen einen temperaturabhängigen Widerstand auf. Daneben ist es auch möglich, einen separaten Temperatursensor, zum Beispiel in der Form eines Wendels aus Platin, vorzusehen.

In Figur 4 ist eine weitere abgewandelte Ausführungsform des Messsensors 1 dargestellt. Bei diesem Messsensor 1 bildet die Pumpelektrode 4 den Messgasspeicher 6. Zu diesem Zweck ist die Messelektrode 4 porös ausgebildet und mit der Abdeckung 7 gasdicht abgeschlossen.

Eine weitere Ausführungsform des Messsensors 1 ist in Figur 6 dargestellt. Diese Ausführungsform des Messsensors 1 orientiert sich am mechanischen Aufbau der klassischen Lambda-Sonde. Bei dem in Figur 6 dargestellten Messsensor 1 ist der Ionenleiter 2 kegelförmig ausgebildet. Auf einer Außenseite 17 des Ionenleiters 2 ist die Pumpelektrode 3 und auf einer Innenseite 18 die Pumpelektrode 4 angeordnet. Die Pumpelektrode 3 ist unmittelbar dem im Messgasraum 5 vorbeiströmenden Abgas ausgesetzt. Die auf der Innenseite 18 angeordnete Pumpelektrode 4 ist dagegen mit der Abdeckung 7 gasdicht abgeschlossen. Alternativ dazu kann vorgesehen sein, den Innenraum des kegelförmigen Ionenleiters 2 durch einen Verschluss im Bereich einer Öffnung 19 des Ionenleiters 2 abzudichten.

Der in Figur 7 dargestellte Messsensor 1 ist gegenüber den in den Figuren 3 bis 5 dargestellten Messsensoren 1 weiter miniaturisiert. Der Messsensor 1 aus Figur 7 weist ein Substrat 20, beispielsweise aus $Al_2O_3$, auf. Auf dem Substrat 20 ist der Ionenleiter 2 aufgebracht, zum Beispiel durch Drucken oder Laminieren. Im Gegensatz zu den in den Figuren 3 bis 5 dargestellten Ausführungsbeispielen sind bei dem Messsensor 1 aus Figur 7 die Pumpelektrode 3 und die Pumpelektrode 4 in einer Interdigitalstruktur auf die gleiche Seite des Ionenleiters 2 aufgebracht. Dabei ist die Pumpelektrode 4 als Messgasspeicher 5 ausgebildet und gegenüber der Umgebung abgedichtet. Die Abdichtung der Pumpelektrode 4 und die Erzeugung des Speichervolumens erfolgt wie bei den in den Figuren 3 und 4 dargestellten Ausführungsbeispielen.

Die in den Figuren 3 bis 5 dargestellten Ausführungsbeispiele des Messsensors 1 können auch weiter miniaturisiert werden, indem auf die Zuleitungen 14 und 15 verzichtet wird und indem die Pumpelektroden 3 und 4 unmittelbar durch Bonddrähte kontaktiert werden. Derartige Bonddrähte werden auch zur Kontaktierung der Pumpelektrode 3 und 4 des Messsensors 1 aus Figur 7 verwendet. Ein entsprechender Aufbau ist in Figur 8 dargestellt. Auf einer Grundplatte 21 befinden sich Kontaktstifte 22, die über Bonddrähte 23 mit dem Messsensor 1 verbunden sind.

Allen hier dargestellten Ausführungsbeispielen ist gemeinsam, dass die Pumpelektrode 3 gegen den Einfluss korrosiver Abgase durch Aufbringen einer oder mehrerer gasdurchlässiger Schichten, die unter Umständen eine poröse Struktur aufweisen, geschützt werden kann.

Die hier beschriebenen Messsensoren weisen eine Reihe von Vorteilen auf. Zum einen wird gegenüber dem Stand der Technik auf einen aufwändig herzustellenden Diffusionskanal verzichtet. Daher findet auch keine Degradation der Sensorkanäle durch etwaige Verschmutzungen des Diffusionskanals oder eine graduelle Deaktivierung der Elektroden statt. Die Sensorkennlinie ist vielmehr durch das Volumen des Messgasspeichers 6 bestimmt, welches auf einfache und reproduzierbare Weise konstant gehalten werden kann. Außerdem wird keine Gasverbindung zur Außenluft benötigt. Dies bedingt einen einfachen Aufbau des Messsensors 1 und des den Messsensor 1 umschließenden Gehäuses. Der Aufbau des Messsensors ist schließlich nahezu beliebig miniaturisierbar, wodurch Herstellung und Betrieb im Hinblick auf den Stromverbrauch erheblich wirtschaftlicher werden. Außerdem kann das Sensorsignal auf verschiedene Weise gewonnen werden. Neben einer Auswertung der geflossenen Ladungsmenge ist auch eine Messung auf der Grundlage der Nernst-Spannung möglich. Dabei öffnen sich verschiedene Möglichkeiten zur Kompensation der Alterung des Messsensors 1 und der Selbstdiagnose.

Neben der Messung des Sauerstoffgehalts von Abgasen eignen sich die beschriebenen Messsensoren auch für die Messung des Sauerstoffgehalts in der menschlichen Atemluft. Mögliche Anwendungsfelder sind die Überwachung der Atemluft in der Medizintechnik oder die Atemgaskontrolle von Beatmungssystemen, die beispielsweise bei der Feuerwehr oder in der Tauchtechnik verwendet werden.

**Patentansprüche**

1. Vorrichtung zur Bestimmung des Partialdruckes eines Messgases in einem Messgasraum (5) mit einer gasselektiven Pumpzelle, die einen Ionenleiter (2) aufweist, der zwischen mit Spannung beaufschlagbaren Pumpelektroden (3, 4) angeordnet ist,
**dadurch gekennzeichnet, dass**
über eine erste dem Messgasraum (5) zugewandte Pumpelektrode (3) Messgas zwischen dem Messgasraum (5) und dem Ionenleiter (2) austauschbar ist und
dass über eine zweite dem Messgasraum (5) abgewandte Pumpelektrode (4) Messgas zwischen dem Ionenleiter (2) und einem gasdichten Messgasspeicher (6) austauschbar ist.

2. Vorrichtung nach Anspruch 1,
bei der die Pumpelektroden 83, 4) an eine Vorrichtung angeschlossen sind, die in der Lage ist, eine an den Pumpelektroden anliegende Spannung (U) von einem Anfangswert auf einen Endwert zu erhöhen und dabei die über die Pumpelektroden (3, 4) geflossene Ladung zu messen.

3. Vorrichtung nach Anspruch 1
bei der die Pumpelektroden (3, 4) an eine Vorrichtung angeschlossen sind, die zur periodischen Variation einer an den Pumpelektroden (3, 4) anliegenden Spannung (U) und zur Messung der dabei auftretenden Stromamplitude eingerichtet sind.

4. Vorrichtung nach Anspruch 3,
bei der die an den Pumpelektroden (3, 4) anliegende Spannung einen Gleichspannungsanteil aufweist.

5. Vorrichtung nach einem der Ansprüche 1 bis 4,
bei der der Messgasspeicher (6) von einem gasdicht abgedeckten porösen Körper auf der dem Messgasraum (5) abgewandten Pumpelektrode (4) gebildet ist.

6. Vorrichtung nach einem der Ansprüche 1 bis 4,
bei der die vom Messgasraum (5) abgewandte Pumpelektrode (4) porös ausgebildet ist und den Messgasspeicher (6) bildet.

7. Verfahren zur Bestimmung des Partialdruckes eines Messgases in einem Messgasraum (5) unter Verwendung einer Pumpzelle, die einen zwischen Pumpelektroden (3, 4) angeordneten Ionenleiter (2) aufweist, **dadurch gekennzeichnet, dass** mit Hilfe der Pumpzelle Messgas zwischen einem gasdichten Messgasspeicher (6) und dem Messgasraum (5) ausgetauscht wird, wobei zur Messung des Partialdruckes die Menge der dabei fließenden Messgas-Ionen bestimmt wird.

8. Verfahren nach Anspruch 7, bei dem eine an Pumpelektroden (3, 4) der Pumpzelle anliegende Spannung von einem Anfangswert auf einen Endwert erhöht und dabei die über den Ionenleiter (2) fließende Ladung gemessen wird.

9. Verfahren nach Anspruch 7, bei dem eine an den Pumpelektroden (3, 4) anliegende Pumpspannung periodisch variiert und die dabei auftretende Stromamplitude gemessen wird.

10. Verfahren nach Anspruch 9, bei dem die an den Pumpelektroden (3, 4) anliegende, periodisch variierende Spannung einen Gleichspannungsanteil aufweist.

FIG 1

FIG 3

FIG 4

FIG 5

FIG 2A

FIG 2B

FIG 6

FIG 7

FIG 8